# EUROPEAN PATENT APPLICATION

(11) **EP 2 485 133 A1**
(43) Date of publication of application: **08.08.2012**
(21) Application number: 11153576.1
(22) Date of filing: 07.02.2011
(51) Int. Cl.: G06F 3/048

(54) **Electronic device with touch-sensitive display and method of facilitating input at the electronic device**

(71) Applicant: Research In Motion Limited, Waterloo, ON N2L 3W8 (CA)
(72) Inventor: Merrett, Scott, Douglas, Waterloo Ontario N2K 0A2 (CA)
(74) Representative: MERH-IP Matias Erny Reichl Hoffmann

(57) **Abstract**

A method of facilitating input at an electronic device having a touch-sensitive display, the method including: receiving a character input from a touch on the touch-sensitive display; adding the character input to a character string; identifying objects in reference data that have an initial portion that matches the character string; determining candidate next inputs based on the objects identified; determining a most probable next input by ranking the candidate next inputs based on a criteria; and rendering a keyboard with the most probable next input being associated with a primary key and at least one other probable next input being associated with a key located adjacent to the primary key.

## Description

### TECHNICAL FIELD

The present disclosure relates to an electronic device with a touch-sensitive display and the input of data using virtual keys on the touch-sensitive display.

### BACKGROUND DISCUSSION

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers, for example.

Touch screen devices constructed of a display, such as a liquid crystal display, with a touch-sensitive overlay are useful on handheld devices and other electronic devices. Most devices have a limited area for rendering content on the touch-sensitive display and for rendering, for example, virtual keyboards, for user-entry of characters. With such small keyboards, user-entry is challenging and error-prone.

### SUMMARY

In an aspect there is provided, a method of facilitating input at an electronic device having a touch-sensitive display, the method including: receiving a character input from a touch on the touch-sensitive display; adding the character input to a character string; identifying objects in reference data that have an initial portion that matches the character string; determining candidate next inputs based on the objects identified; determining a most probable next input by ranking the candidate next inputs based on a criteria; and rendering a keyboard with the most probable next input being associated with a primary key and at least one other probable next input being associated with a key located adjacent to the primary key.

In another aspect there is provided, an electronic device including: a touch-sensitive display for receiving a character input from a touch; a memory for storing linguistic objects; a processor for adding the character input to a character string, identifying linguistic objects having an initial portion that matches the character string, determining candidate next inputs based on the identified linguistic objects, determining a most probable next input by ranking the candidate next inputs based on a criteria and rendering a keyboard with the most probable next input being associated with a primary key and at least one other probable next input being associated with a key located adjacent to the primary key.

Other aspects and features of the present disclosure will become apparent to those ordinarily skilled in the art upon review of the following description of specific embodiments in conjunction with the accompanying Figures.

### BRIEF DESCRIPTION OF THE DRAWINGS

Embodiments of the present application will now be described, by way of example only, with reference to the attached Figures, wherein:

FIG. 1 is a simplified block diagram of components of an example portable electronic device;

FIG. 2 is a front view of a display of an example portable electronic device in accordance with the disclosure;

FIG. 3 is another front view of a display of an example portable electronic device in accordance with the disclosure; and

FIG. 4 is a view of a keyboard displayed on a display of an example portable electronic device in accordance with the disclosure;

FIG. 5 is a flow chart illustrating a method of facilitating input at the portable electronic device, in accordance with the disclosure;

FIGS. 6A to 6E are views of a keyboard and a text field for display on a display of an example portable electronic device in accordance with the disclosure;

FIGS. 7A to 7G are views of a keyboard and a text field for display on a display of an example portable electronic device in accordance with the disclosure; and

FIG. 8 is a front view of a display of an example portable electronic device in accordance with the disclosure.

### DETAILED DESCRIPTION

The following describes a method and apparatus to facilitate input at an electronic device having a touch-sensitive display, the method including: receiving a character input from a touch on the touch-sensitive display; adding the character input to a character string; identifying objects in reference data that have an initial portion that matches the character string; determining candidate next inputs based on the objects identified; determining a most probable next input by ranking the candidate next inputs based on a criteria; and rendering a keyboard with the most probable next input being associated with a primary key and at least one other probable next input being associated with a key located adjacent to the primary key.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device.

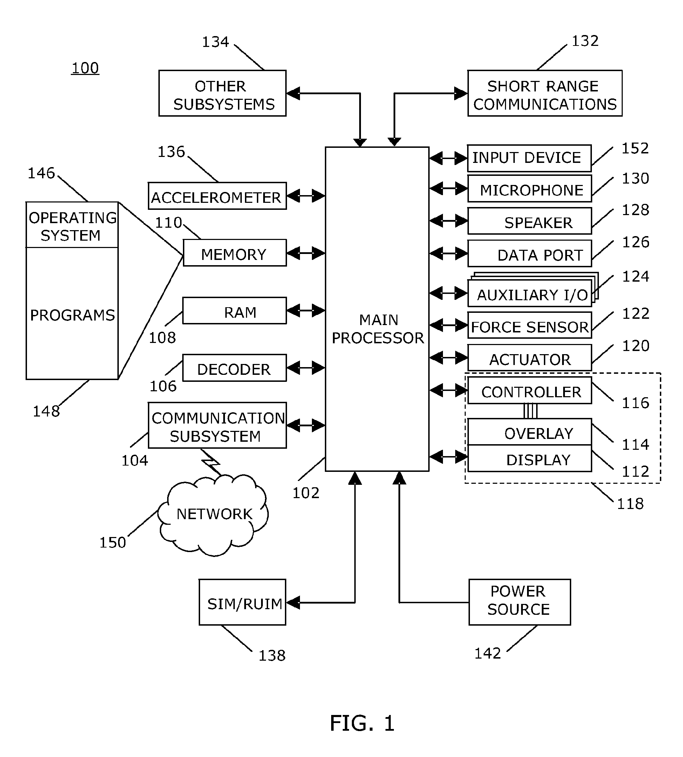

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 coupled to an electronic controller 116 that together comprise a touch-sensitive display 118, an auxiliary input/output (I/O) subsystem 124, a data port 126, a speaker 128, a microphone 130, short-range communications 132, and other device subsystems 134. The processor 102 may optionally interact with one or more actuators (not shown) to provide tactile feedback and one or more force sensors (not shown) to detect a force imparted on the touch-sensitive display 118. Interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an orientation sensor such as an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range com m unications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display may include a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

The touch-sensitive display 118 is also configured to detect a gesture. A gesture, such as a swipe, is a type of touch, that begins at an origin point and continues to a finishing point while touch contact is maintained. A swipe may be long or short in distance, or duration, or both distance and duration. Two points of the swipe may be utilized to determine a vector that describes a direction of the swipe. The direction may be referenced with respect to the touch-sensitive display 118, the orientation of the information displayed on the touch-sensitive display 118, or another reference. For the purposes of providing a reference, "horizontal" as utilized herein is substantially left-to-right or right-to-left relative to the orientation of the displayed information, and "vertical" as utilized herein is substantially upward or downward relative to the orientation of the displayed information. The origin point and the finishing point of the swipe may be utilized to determine the magnitude or distance of the swipe. The duration of the swipe may be determined from the origin point and finishing point of the swipe in time. The processor 102 receives data from the controller 116 to determine the direction, magnitude, and duration of the swipe. The gesture may be tracked and a plurality of sub-vectors determined for each gesture. The final sub-vector may be utilized to determine a distance and duration of a final portion of the gesture. The processor 102 receives data from the controller 116 to determine the speed of the swipe based on the distance and duration of the final portion of the gesture.

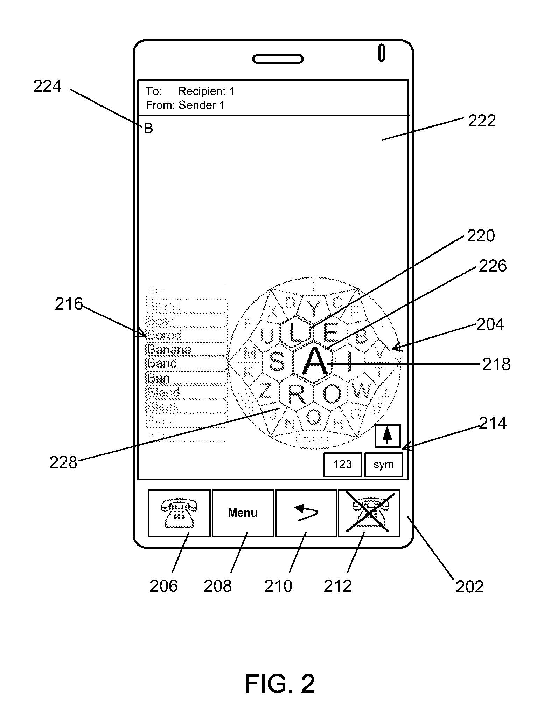

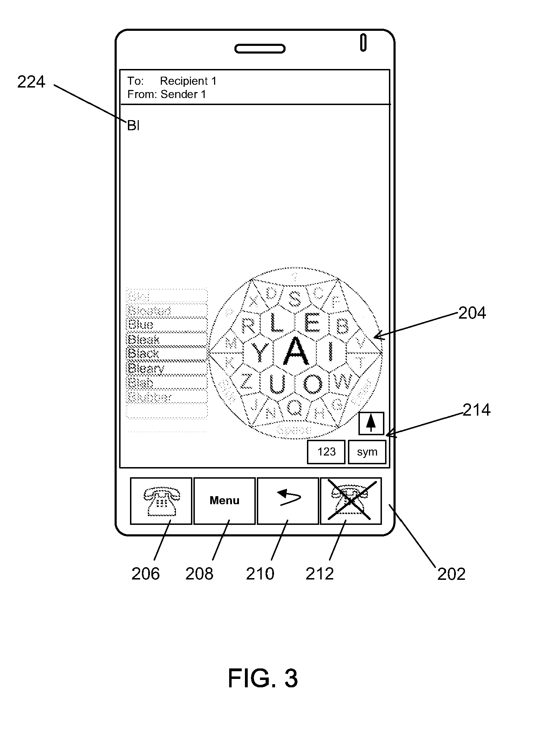

A front view of an example of a portable electronic device 100 is shown in FIGS. 2 and 3. The portable electronic device 100 includes a housing 202 that houses the internal components that are shown in FIG. 1 and frames the touch-sensitive display 118 such that an outer surface of the touch-sensitive display 118 is exposed for user-interaction when the portable electronic device 100 is in use. In the example orientation shown in FIG. 2, the touch-sensitive display 118 includes a virtual keyboard 204 for user input of data in the form of, for example, alphanumeric characters or symbols during operation of the portable electronic device 100.

The keyboard 204 is rendered for display and includes a grouping of keys, or buttons, 228. In the example of FIG. 2 and FIG. 3, the keyboard 204 is circular in shape and includes keys 228. A primary key 218 is provided generally at the centre of the keyboard 204. The keyboard 204 is located on the touch-sensitive display 118 to facilitate convenient location of the primary key 218 for selection. In the example of FIG. 2 and FIG. 3, the keyboard 204 is located to facilitate selection of the keys using the thumb while holding the device in one hand. Function keys 214 are provided to facilitate input of numbers, symbols and letters. A list 216 is further displayed.

The area on the touch-sensitive overlay 114 that is associated with a character or function such that a touch anywhere on that area results in selection of the character or function, matches the area of the corresponding rendered representation on the touch-sensitive display 118. Therefore, the area of the touch-sensitive overlay 114 at which a touch is associated with the character that is associated with the primary key 218, for example, matches the area 226 outlined by the virtual button for the primary key 218. The area may be larger or smaller than the rendered representation on the touch-sensitive display 118.

The keyboard 204 is not limited to being a circular keyboard. The keyboard 204 may be any portion of a circle, oval, square, rectangular or diamond, for example. In general, the keyboard 204 may be any shape in which keys 228 are grouped near the primary key 218. In addition, more than one primary key 218 may be displayed with other keys arranged near the primary keys 218.

In the present example, the portable electronic device includes four physical buttons 206, 208, 210, 212 in the housing 202 for user-selection for performing functions or operations when selected. The example portable electronic device of FIG. 2 and FIG. 3 further includes the keyboard 204, function keys 214 and list 216, which are rendered for display on the touch sensitive display 118.

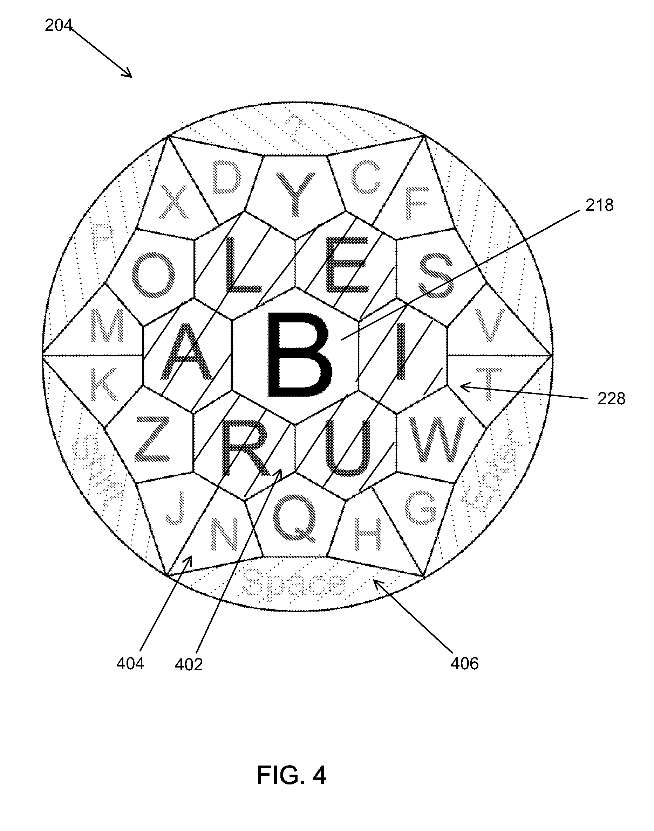

Referring also to FIG. 4, the primary key 218 is surrounded by the other keys 228, which are arranged in a first zone 402, a second zone 404 and a third zone 406. The zones 402, 404, 406 have been shaded in order more easily identify the zones 402, 404, 406 for the purpose of this description. The first zone 402 is located adjacent to the primary key 218, the third zone 406 is located farthest from the primary key 218 and the second zone 404 is located between the first and third zones. The keys 228 in the first zone are slightly smaller than the primary key 218. Similarly, the keys 228 of the second zone 404 are smaller than the keys of the first zone 402 and the keys 228 of the third zone 406 are smaller than the keys 228 of the second zone 404.. Although the layout of the keys 228 generally remains unchanged, the characters that are associated with the keys 228 may change based on user input.

It will be appreciated that the keys 228 may be any shape and are sized to facilitate selection of keys 228 on the touch-sensitive display 118 by a user's thumb or finger. Keys 228 that are farther away from the primary key 218 may be smaller than the keys 228 that are close to the primary key 218. In general, contacting the primary key 218 and keys 228 in the first zone 402 involves less movement of the user's thumb than contacting keys 228 in the second and third zones 404, 406.

In one embodiment, color may be used to differentiate between keys in different zones. For example, the primary key 218 may be highlighted in a bright color, such as yellow, and keys 228 of the first zone 402, second zone 404 and third zone 406 may be different colors, with the colors becoming less eye-catching as the distance from the primary key 218 increases.

The keys 228 are ordered based on their proximity to the primary key 218 with keys 228 that are closest to the primary key 218, such as keys 228 of the first zone 402, being at the top and keys 228 that are farther from the primary key 218, such as keys 228 of the third zone 406, being at the bottom. Keys 228 that are located in the same zone and are the same distance from the primary key 218 may further be ordered based on ease of movement of the user's thumb to the key 228 from the primary key 218. For example, a user's thumb may move more easily to the left rather than to the right when the portable electronic device 100 is held in a user's right hand. In this example, keys 228 that are on the left side of a zone may be ordered higher than keys 228 on the right side of the same zone. Similarly, a user's thumb may move more easily to the right rather than to the left when the portable electronic device 1 00 is held in a user's left hand. In this example, keys 228 that are on the right side of a zone may be ordered higher than keys 228 on the left side of the same zone.

Characters are associated with the keys 228 based on the probability of selection as a next input by the user. Candidate next inputs are determined using reference data that is stored in memory 110. Candidate next inputs are associated with the keys 228 of the keyboard 204 based on the proximity-based order of the keys 228, with a most probable next input being associated with the primary key 218. When the keyboard 204 is rendered, candidate next inputs are displayed on the keys 228.

The reference data is searchable to identify linguistic objects that match an entered character string. The reference data may be provided as part of a predictive text application that includes a frequency ranking such that words that are entered more often by the user are ranked higher. The predictive text application may be used to generate a ranking of candidate next inputs. Further, the predictive text application may modify the reference data to add words when a linguistic object, such as a word or set of characters, that is not already included, is entered by the user.

A starting keyboard may be rendered upon selection of a text field in an application, prior to any text being entered by the user. In one embodiment, the starting keyboard includes the most frequently used letters of an alphabet. For example, the letters: "r", "s", "t", "l", "n", "e", "a", "i", "o" and "u" may be associated with the primary key 218 and those keys 228 that are nearest thereto. In another embodiment, the characters that are associated with the starting keyboard are determined by the predictive text application. In this embodiment, the most frequently selected characters are associated with the primary key 218 and those keys 228 that are nearest thereto.

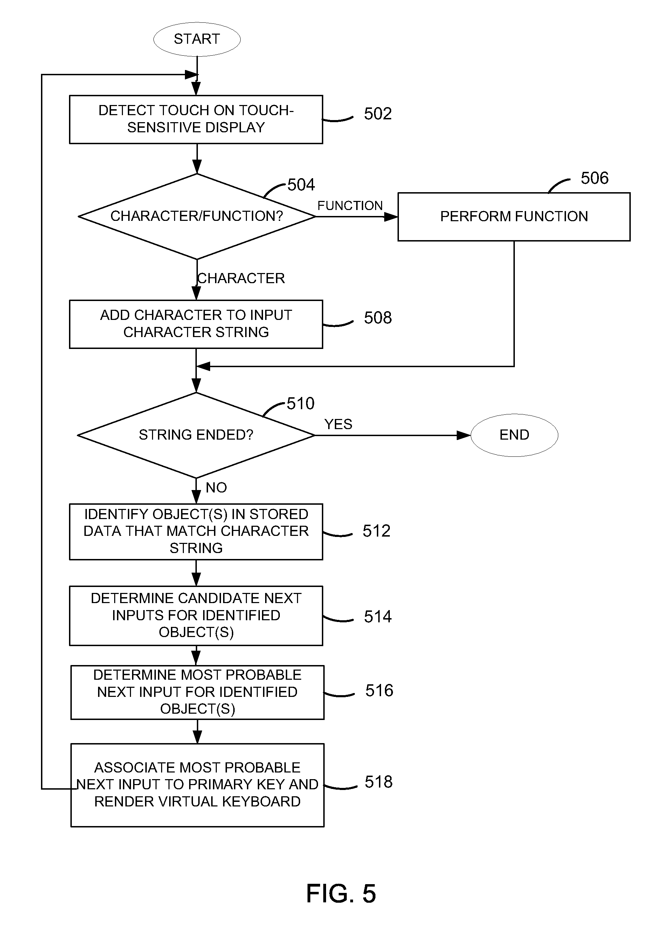

FIG. 5 is a flowchart illustrating an example method of facilitating input at an electronic device having a touch-sensitive display. The method may be carried out by software executed by, for example, the processor 102. Coding of software for carrying out such a method is within the scope of a person of ordinary skill in the art given the present description. The method may contain additional or fewer processes than shown and described, and may be performed in a different order. Computer-readable code executable by, for example, the processor 102 of the portable electronic device 100 to perform the method, may be stored in a computer-readable medium

The example method of facilitating input at an electronic device having a touch-sensitive display is invoked, for example, in a text input field. The processor 102 detects 502 a touch on the touch-sensitive display 118. The coordinates (location) of the touch on the touch-sensitive overlay 114 are determined upon detection of the touch and the corresponding input is determined 504 based on the coordinates of the touch. If the input performs a function 506, a character string entered on the portable electronic device 100 ends 510 and the method continues at 502 where the processor detects 502 a touch on the touch-sensitive display 118. If the input does not end 510 a character string entered on the portable electronic device 100, the method continues at 508. The character input is added 508 to a character string entered on the portable electronic device 100. Objects stored in, for example, the memory 110, that have at least an initial portion that matches the character string are determined 512. For each object that has an initial portion that matches the character string, a candidate next input is determined 514. The candidate next input may be an alphanumeric character or a space when all characters of an object match a character string. From the candidate next inputs, a most probable next input is determined 516. The keyboard is then rendered 518 with the most probable next input being associated with the primary key 218.

The most probable next input is determined 516 by the predictive text application, which generates a ranking of candidate next inputs; the most probable next input being at the top and the least probable next input being at the bottom. The ranking of the candidate next inputs may be based on a frequency ranking of linguistic objects, a frequency ranking of individual characters or another criteria that may be relied upon by the predictive text application.

The candidate next inputs may be associated with all of the keys 228 so that candidate next inputs having a high probability of being selected are located at or nearest to the primary key 218 and candidate next inputs having a low probability of being selected are located farthest from the primary key 218. In general, the proximity-based order of the keys 56 and the ranking of candidate next inputs are merged in order to associate characters with the keys 228. For example, the candidate next input that is second in the ranking of candidate inputs is associated with the key 228 that is nearest to and most easily accessible from the primary key 218.

The flowchart of FIG. 5 is simplified for the purpose of explanation. Additional steps may be carried out. Further touches may also be detected after an input ends a character string.

Continued reference is made to FIG. 5, with additional reference to FIG. 2 and FIG. 3 to describe an example of a method of facilitating input at the portable electronic device 100. In the present example, the keyboard 204 is rendered on the touch-sensitive display 118 for user entry of data in fields of an application, such as an email application. As shown, in FIG. 2 and FIG. 3, the letter "a" is associated with the primary key 218.

For the purpose of the present explanation, the user has already entered the character "B" in a body 222 of an e-mail during composition of the email. The user touches the touch-sensitive display 118 at a location 220 corresponding to the character "l", for selection of the character "l". The touch is detected 502 on the touch-sensitive overlay 114. and the coordinates of the touch are determined based on signals received at the controller 116 from the touch-sensitive overlay 114. The corresponding input is determined 504 by matching the coordinates of the touch to a key 228 and then determining which character is associated with that key 228.

Input that ends a character string includes a "SPACE" input or a return input entered using the keyboard 204. Therefore, the input (character "l") does not end 506 a character string 224 entered on the portable electronic device 100 and the method continues at 508. The "l" is added 508 to the character string 224 entered on the portable electronic device 100, resulting in the character string "BI". Linguistic objects stored in the flash memory 16 that have at least an initial portion that matches the character string are determined 512. In the present example, the linguistic objects identified are word objects include: "blot", "bloated", "blue", "bleak", "black", "bleary", "blab" and "blubber". The initial portion of each of these word objects matches the character string "BI" as there is a match between the characters and the order of characters in each.

For each of the identified word objects, candidate next inputs are determined 514. The next input is the next alphanumeric character or symbol in the word object. Thus, the characters "o", "u", "e" and "a" are determined 514. A ranking of candidate next inputs is then generated to determine the character layout for the keyboard 204. As shown in FIG. 3, the most probable next input is determined 516 to be character "a", which is associated with the primary key 218. The other next inputs from the ranking of candidate next inputs are associated with the keys 228 based on the proximity based order of the keys 228. As shown, characters: "o", "u", "e", "i", "y" and "l" are associated with keys 228 in the first zone 402; characters "d", "s", "c", "f", "b", "v", "t", "w", "g", "h", "q", "n", "j", "z", "k", "m", "r", and "x" are associated with keys in the second zone 404; and characters: "p", "?", ".", "Enter", "Space" and "Shift" are associated with keys in the third zone 406.

In one embodiment, when matching word objects have been identified 512, the list 216 is populated with a list of the most frequently used word objects. Words from the list 216 are selectable by the user.

In the example of FIG. 2 and FIG. 3, the field in which characters are entered is the body 222 of a message in a messaging application. The keyboard 204 may be used to facilitate entry of characters into any text field in any application. For example, in a calendar application, the keyboard 204 may facilitate entry of calendar events, or in a browser application, the keyboard 204 may facilitate entry of characters into a text field for a search engine. Further, in a web address field, "h" and "w" may be placed on or near the primary key 218 on the default keyboard since entries starting with "http" and "www" are more probable.

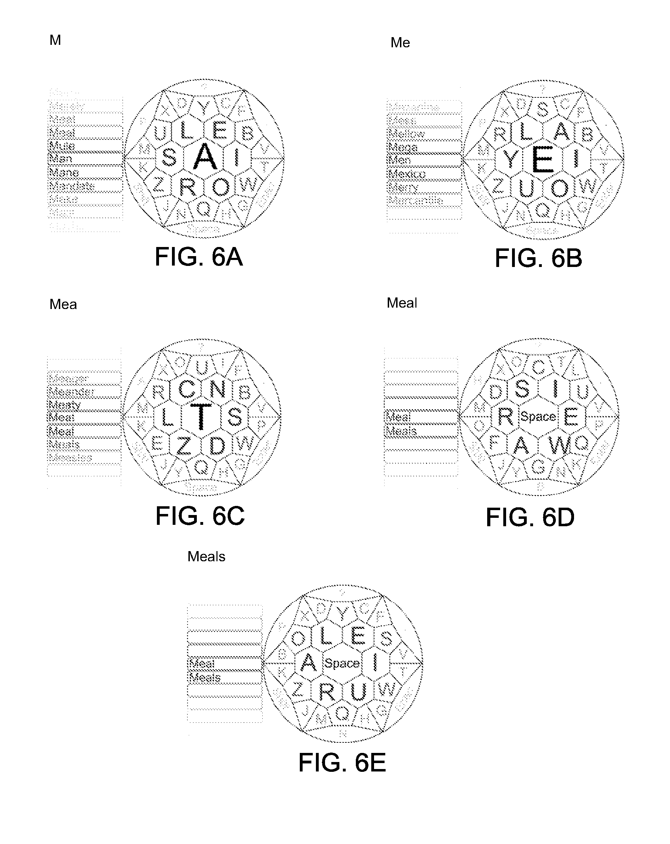

Referring to FIG. 6A, another example depicting operation of the keyboard 204 is generally shown. In this example, the user has already entered the character "M" in a text field. A ranking of candidate next inputs is then generated in order to determine the character layout for the keyboard 204. As shown in FIG. 6A, the most probable next input is determined to be character "a", which is associated with the primary key 218, followed by characters "s". "l", "e", "i", "o", and "r", which are associated with keys in the first zone 402. The user selects "e" from the keyboard 204 shown in FIG. 6A and the keyboard 204 is then rendered as shown in FIG. 6B with the most probable next input, "e", being associated with the primary key 218 and the next most probable inputs "y", "l"," a", "i", "o" and "u" being associated with the keys 228 of the first zone 402. As shown in FIGS. 6C to 6E, following each user input, the keyboard 204 is rendered so that characters that are most likely to be selected next are closest to the primary input location.

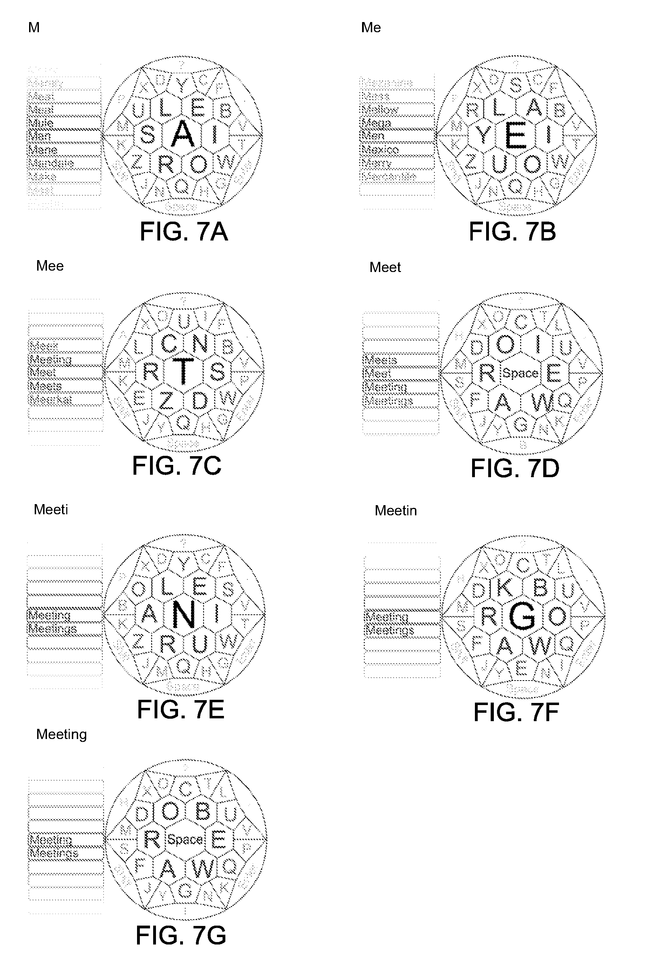

Referring also to FIGS. 7A to 7G, another example depicting operation of the keyboard 204 is generally shown. In this example, the user types the word "Meeting". Following each character input by the user, the keyboard 204 is rendered to associate the most probable next input with the primary key 218 and to associate the next most probable next inputs with the keys 228 of the first zone 402, the second zone 404 and the third zone 406.

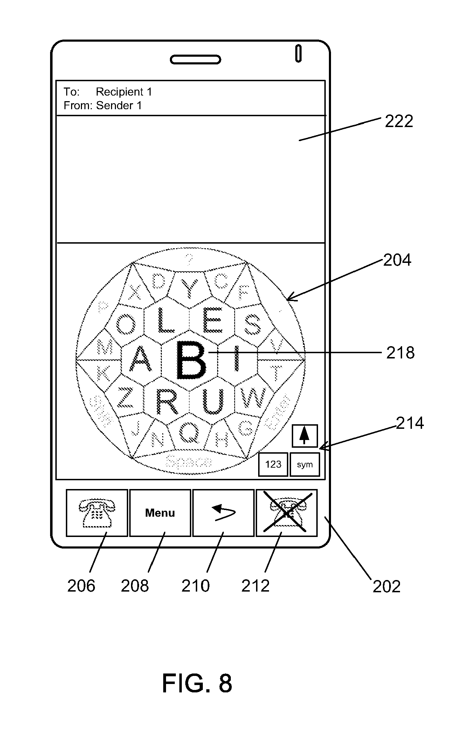

Referring to FIG. 8, an embodiment in which the list has been omitted is generally shown. Because of the increased size of the keys 228, accuracy of data entry may be higher than in the other embodiments that have been disclosed.

In another embodiment, the characters associated with the keys 228 are characters from a non-English alphabet, such as the Chinese alphabet, for example. Similar to the previous embodiments, the keyboard 204 would be rendered following each character input to associate the most probable next character input with the primary key 218, other probable next character inputs to keys 228 in the first zone 402 and less probable next character inputs to the second and third zones 404, 406. For languages having a large number of characters, additional zones may be included. In addition, for keyboards of any language, special characters may be incorporated into the keyboard 204 including diacritical characters, for example.

In another embodiment, the keyboard 204 may include numbers and be used in place of a phone dialing pad.

In another embodiment, default settings of the device 10 may be modified to move the keyboard 204 to different locations on the display 20. This facilitates location of the primary key 218 to coincide with a location of user thumb contact when the device 10 is gripped with one hand. If a user is left-handed, for example, the primary key 218 would be located under the left thumb. Similarly, if a user is right-handed, for example, the primary key 218 would be located under the right thumb.

The method of facilitating input at an electronic device having a touch-sensitive display disclosed herein may be implemented on any electronic device. For example, a navigation interface in a vehicle may include a touch screen having a keyboard 204 as described herein rather that the QWERTY keyboard to facilitate entry of a destination address. The starting keyboard that is rendered may include numbers to facilitate entry of an address by the user. As another example, a control panel for a machine in a factory may also include a keyboard 204. Instead of the alphabet, control commands such as start, pause, increase speed, decrease speed and stop, for example, may be grouped together with the most probable next input being the most accessible option for the user. In another example, an item selector on a vending machine may include a keyboard 204 according to the described embodiments. The selectable characters, each of which corresponds to an item, may be grouped about the character that corresponds to the most popular item.

In other examples, the linguistic objects include contact data records stored in a contacts database and contact data records that have at least an initial portion that match the character string are identified. Such identification is useful during, for example, searching for a contact data record for information or for placing a call, populating an email address, populating an SMS or MMS address, or the like.

The method of facilitating input at an electronic device having a touch-sensitive display described herein allows the user to type with their thumb while holding the device 10 in one hand. Each time a character is entered, the keyboard 204 is rendered to locate the most probable next inputs generally underneath the thumb of the user and adjacent thereto. This facilitates one-handed character entry by the user.

The method may have ergonomic advantages and may reduce overuse injuries related to typing on small keyboards of handheld devices. In addition, the keyboard 204 may be easily modified to accommodate different languages and may accommodates users who are not proficient with the traditional QWERTY keyboard.

The above-described embodiments are intended to be examples only. Alterations, modifications and variations can be effected to the particular embodiments by those of skill in the art without departing from the scope of the present application, which is defined solely by the claims appended hereto.

## Claims

1. A method of facilitating input at an electronic device having a touch-sensitive display (118), the method comprising:
receiving a character input from a touch on the touch-sensitive display (118);
adding the character input to a character string;
identifying objects in reference data that have an initial portion that matches the character string;
determining candidate next inputs based on the objects identified;
determining a most probable next input by ranking the candidate next inputs based on a criteria; and
rendering a keyboard (204) with the most probable next input being associated with a primary key (218) and at least one other probable next input being associated with a key located adjacent to the primary key (218).

2. A method as claimed in claim 1, comprising rendering a keyboard (204) with keys (228) for at least each character of an alphabet.

3. A method as claimed in claim 2, wherein the alphabet is an English-language alphabet.

4. A method as claimed in claim 1, comprising rendering a keyboard (204) with a grouping of keys (228) arranged about the primary key (218), each key (228) being associated with a character.

5. A method as claimed in any of claims 1 to 4, wherein the reference data comprises linguistic objects.

6. A method as claimed in any of claims 1 to 5, wherein determining candidate next inputs comprises identifying next characters of objects identified.

7. A method as claimed in claim 2, comprising rendering a keyboard (204) with keys (228) arranged in zones: a first zone (402) located nearest to the primary key, a second zone (404) located farther from the primary key (218) and a third zone (406) located farthest from the primary key (218).

8. A method as claimed in claim 8, comprising rendering a keyboard (204) with next probable inputs being associated with keys (228) in the first zone (402), the second zone (404) and the third zone (406) in order according to the ranking of candidate next inputs, with linguistic objects that are more probable being located closer to the primary key (218).

9. A method as claimed in any of claims 1 to 8, wherein the criteria is a frequency ranking of objects in reference data.

10. A method as claimed in any of claims 1 to 8, wherein the criteria is a frequency ranking of characters.

11. A computer-readable medium comprising instructions executable on a processor (102) of an electronic device (100) for implementing the method of any of claims 1 to 10.

12. An electronic device (100) comprising:
a touch-sensitive display (118) for receiving a character input from a touch;
a memory (110) for storing linguistic objects;
a processor (102) for adding the character input to a character string, identifying linguistic objects having an initial portion that matches the character string, determining candidate next inputs based on the identified linguistic objects, determining a most probable next input by ranking the candidate next inputs based on a criteria and rendering a keyboard (204) with the most probable next input being associated with a primary key (218) and at least one other probable next input being associated with a key (228) located adjacent to the primary key (218).

## Amended claims

### Amended claims in accordance with Rule 137(2) EPC.

**1.** A method of facilitating input at an electronic device having a touch-sensitive display (118), the method comprising:
receiving a character input from a touch on the touch-sensitive display (118);
adding the character input to a character string;
identifying objects in reference data that have an initial portion that matches the character string;
determining candidate next inputs based on the objects identified;
determining a most probable next input by ranking the candidate next inputs based on a criteria; and
rendering a keyboard (204) with the most probable next input being associated with a primary key (218) and at least one other probable next input being associated with a key located adjacent to the primary key (218);
wherein the key located adjacent to the primary key is smaller than the primary key.

**2.** A method as claimed in claim 1, comprising rendering a keyboard (204) with keys (228) for at least each character of an alphabet.

**3.** A method as claimed in claim 2, wherein the alphabet is an English-language alphabet.

**4.** A method as claimed in claim 1, comprising rendering a keyboard (204) with a grouping of keys (228) arranged about the primary key (218), each key (228) being associated with a character.

**5.** A method as claimed in any of claims 1 to 4, wherein the reference data comprises linguistic objects.

**6.** A method as claimed in any of claims 1 to 5, wherein determining candidate next inputs comprises identifying next characters of objects identified.

**7.** A method as claimed in claim 2, comprising rendering a keyboard (204) with keys (228) arranged in zones: a first zone (402) located nearest to the primary key, a second zone (404) located farther from the primary key (218) and a third zone (406) located farthest from the primary key (218).

**8.** A method as claimed in claim 8, comprising rendering a keyboard (204) with next probable inputs being associated with keys (228) in the first zone (402), the second zone (404) and the third zone (406) in order according to the ranking of candidate next inputs, with linguistic objects that are more probable being located closer to the primary key (218).

**9.** A method as claimed in any of claims 1 to 8, wherein the criteria is a frequency ranking of objects in reference data.

**10.** A method as claimed in any of claims 1 to 8, wherein the criteria is a frequency ranking of characters.

**11.** A computer-readable medium comprising instructions executable on a processor (102) of an electronic device (100) for implementing the method of any of claims 1 to 10.

**12.** An electronic device (100) comprising:
a touch-sensitive display (118) for receiving a character input from a touch;
a memory (110) for storing linguistic objects;
a processor (102) for adding the character input to a character string, identifying linguistic objects having an initial portion that matches the character string, determining candidate next inputs based on the identified linguistic objects, determining a most probable next input by ranking the candidate next inputs based on a criteria and rendering a keyboard (204) with the most probable next input being associated with a primary key (218) and at least one other probable next input being associated with a key (228) located adjacent to the primary key (218), the key located adjacent to the primary key being smaller than the primary key.

**13.** A method as claimed in claim 1, comprising rendering a list on the touch-sensitive display, the list comprising identified matching word objects.
